## Europäisches Patentamt
## European Patent Office
## Office européen des brevets

(11) Publication number: **0 071 480**
**B1**

# EUROPEAN PATENT SPECIFICATION

(45) Date of publication of patent specification: **14.05.86**

(51) Int. Cl.⁴: **B 01 D 33/04**

(21) Application number: **82304012.6**

(22) Date of filing: **29.07.82**

(54) **Vacuum filter transporter belt.**

(30) Priority: **30.07.81 GB 8123356**

(43) Date of publication of application:
**09.02.83 Bulletin 83/06**

(45) Publication of the grant of the patent:
**14.05.86 Bulletin 86/20**

(84) Designated Contracting States:
**AT BE CH DE FR IT LI LU NL SE**

(56) References cited:
**FR-A-2 135 458**
**GB-A-2 012 179**

(73) Proprietor: **DELKOR TECHNIK A.G.**
**Gartenstrasse 2**
**CH-6300 Zug (CH)**

(72) Inventor: **Bond, Antony Philip**
**High Meadow Midford Lane**
**Limpley Stoke Bath Avon (GB)**

(74) Representative: **Armitage, Ian Michael et al**
**MEWBURN ELLIS & CO. 2/3 Cursitor Street**
**London EC4A 1BQ (GB)**

Courier Press, Leamington Spa, England.

## Description

This invention relates to horizontal belt vacuum filters, and more particularly to the belt which is used on such filters.

In a horizontal belt vacuum filter, an endless rubber transporter belt is trained around a drive mechanism, and in part of its travel it passes along a horizontal path in which the filtration takes place. The rubber belt is transversely grooved to receive the filtrate, the grooves communicating with openings in the belt through which the vacuum is applied and the filtrate removed. An endless filter cloth is also trained around the drive and arranged so that it is superimposed on the transporter belt throughout the horizontal filter path. A vacuum box is located under the transporter belt in the filter path so as to apply the vacuum through the openings in the belt. The filter cake is retained on the filter cloth, whose path normally diverges from that of the transporter belt after the filter path so that the filter cake can be discharged and the filter cloth cleaned. In order to contain the slurry being filtered, the edges of the transporter belt are provided with upstanding kerbs. One form of such a kerb comprises a smooth flange, the two flanges on opposite sides of the belt being upwardly mutually divergent. The outward inclination of the flanges provide a seating for the marginal portions of filter cloth, ensuring that the edge of the cloth does not encroach on the transversely grooved area, which would give rise to a loss of vacuum. The outward inclination of the flanges also enables them more easily to flex outwardly, almost parallel to the plane of the transporter belt, as the belt passes around a curved surface such as an end reversing roller. This outward flexing of the flanges and their stretching as they pass around a curve does however, place considerable strain on them, and in the course of time they are prone to longitudinal cracking along the bottom edge of the flange, and also to vertical splitting from the top edge.

In conveyor belting, as opposed to filter belting, it is known to provide longitudinally undulating sidewalls; that is to say they are corrugated or sinusoidally shaped when viewed in plan. This enables the walls to expand bellows fashion as the belt passes around a roller. These walls stand vertically from the surface of the belt and are intended merely to contain the solid materials carried by the belt. No filter cloth is used, of course, in such equipment.

In connection with horizontal belt vacuum filters, various problems arise which are not encountered with conventional conveyor belts. As already mentioned, it is important to keep the transverse grooves of the transporter ·belt completely covered by the filter cloth throughout the filtration path. Since the filter cloth is separated from the transporter belt at the end of the filtration path, it has to be accurately aligned with the transporter belt when it is brought back onto it, and this involves an accurate tracking mechanism for the cloth. If the transverse grooves of the transporter belt were terminated appreciably short of the sidewalls of the belt there would be a substantial marginal portion of the filter cake to which a proper vacuum would not be applied, and which would not therefore dewater or wash effectively.

It is an object of the present invention to provide a mechanically improved sidewall construction for the transporter belt which preserves a high filtering efficiency without requiring undue accuracy in tracking the filter cloth.

According to the present invention there is provided a transporter belt for a horizontal belt vacuum filter, having on its top surface transverse grooves leading to vacuum applying and liquid extraction apertures in the belt and bounded by upstanding kerbs along the opposite longitudinal margins of the belt, the kerbs being preferably upwardly mutually divergent and comprising a lower longitudinal region adjacent to the belt and an upper longitudinal region extending downwardly from the top edge of the kerb, the lower longitudinal region being longitudinally smooth and in transverse section providing a smooth curve from the top surface of the belt to the upper longitudinal portion, the upper longitudinal portion being longitudinally sinusoidal, the base of each recess on the inside surface of the kerb provided by the sinusoidal configuration sloping downwardly towards the centre of the belt so that liquid accumulating in the recess flows therefrom onto the belt. The inclination of the inside of the kerb is preferably between 0° and 35° from the vertical, and most preferably in the range 21 1/2° to 30°.

In use the filter cloth is laid on the transporter belt so as to extend at least over the lower longitudinal portion, and preferably also at least part-way up the upper longitudinal portion.

In order that the invention may be more clearly understood, two embodiments will now be described with reference to the accompanying drawings, wherein:

Fig. 1 shows a side view of a typical horizontal belt vacuum filter machine,

Fig. 2 shows a perspective view of part of the filter cloth and the transporter belt in the filter path,

Fig. 3 shows a transverse cross-section through a marginal portion of the transporter belt and filter cloth, and

Fig. 4 shows a perspective cross-sectional view of part of a modified form of filter belt.

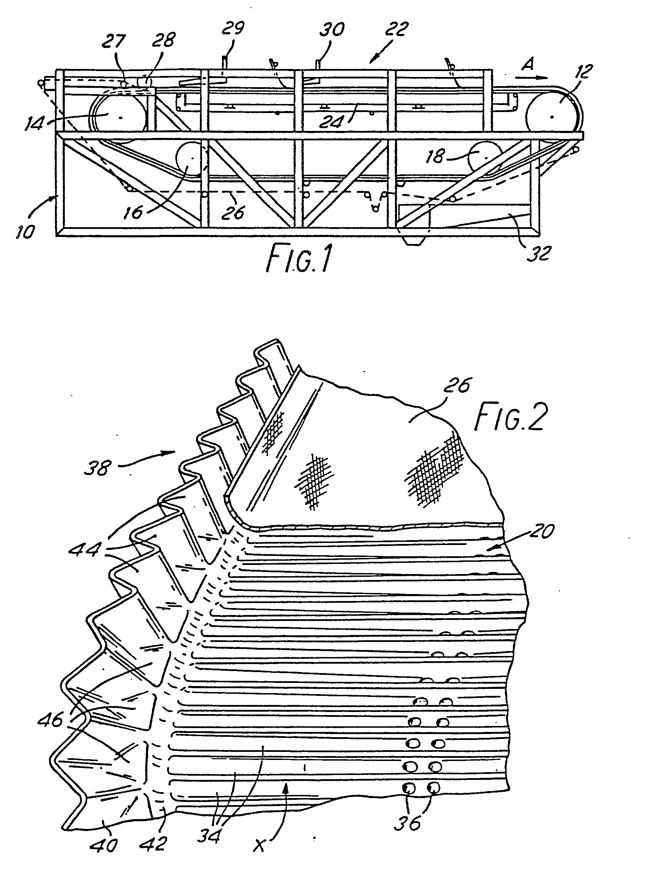

Referring to the drawings and first in Fig. 1; the horizontal belt vacuum filter machine comprises a frame 10 in which are mounted a drive pulley 12 and a take-up pulley 14, together with a pair of idler pulleys 16, 18. A transporter belt 20, suitably made from natural or synthetic rubber, is trained around the pulleys so as to be driven by the drive pulley in the direction indicated by the arrow A. The drive pulley and the take-up pulley are on the same level, so that the transporter belt between them moves over a horizontal or slightly inclined path, the greater part of which comprises the filter path 22. This is defined by a vacuum filter box 24 which is located under the transporter belt so as to apply vacuum to its underside. An endless filter cloth 26 is trained around a series of idler pulleys, and when the cloth is not in the filtration area for the most part its path is separate from that of the transporter belt, but it is superimposed on the top surface of the transporter belt by a cloth guide roller 27 and a feed dam roller 28 at the beginning of the horizontal path, and remains superimposed throughout the filter path and around the drive roller 12 or around or over the discharge rollers. Thus the transporter belt is driven by roller 12 which is in turn driven by an electric motor (not shown). The filter cloth is driven by the vacuum force and friction between the transporter belt and the filter cloth. Conventional ancillary equipment is provided, such as a slurry distributor 29, a wash water distributor 30 and a cloth wash trough 32.

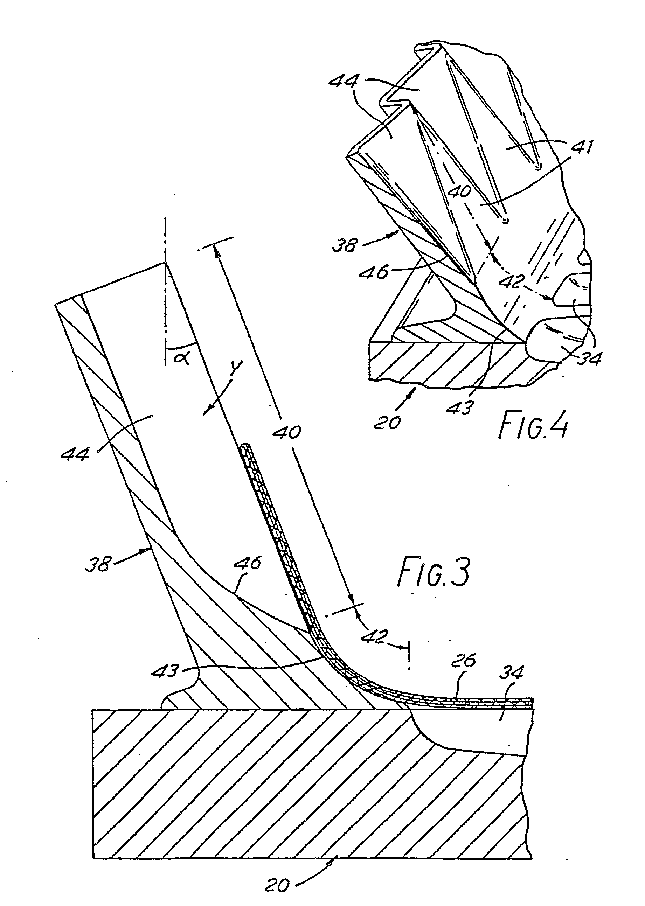

Referring now to Figs. 2 and 3; the transporter belt 20 is provided with a series of transverse grooves 34 in its upper surface the depth of which increase to the centre line of the belt, or may be of even depth across the width of the belt, at which each groove is provided with one or more apertures 36 in the belt through which suction is applied to the top surface of the belt by means of the vacuum box 24. Along the margins of the belt there are provided upstanding kerbs 38, also made from resiliently flexible material such as rubber and optionally reinforced with a cloth insert in the rubber. The insert, if used, may be for example of polyester or polyamide. Each kerb can be considered as comprising an upper longitudinally extending region 40 and a lower longitudinally extending region 42. The upper longitudinal region 40 is inclined upwardly outwards from the centre of the belt so as to make an angle with respect to the vertical which is suitably 21 1/2°. The lower longitudinal region 42 has a transverse profile on its inside surface 43 (i.e. the surface closer to the centre of the belt) which forms a smooth curve from the incline of the upper longitudinal portion 40 to the top surface of the belt, and terminates at or close to the outer edge of the grooves 34. As can best be seen in Fig. 2 the upper longitudinal portion is longitudinally sinusoidal (i.e. corrugated, zig-zag or otherwise undulating in plan view) thereby defining on the inside surface (i.e. the surface facing the centre of the belt) a series of recesses 44. As can best be seen in Fig. 3, the base of each recess 44 has a surface 46 which slopes downwards inwardly with respect to the centre of the belt and terminates at the top of the lower longitudinal region 42. In contrast to the sinusoidal formation of the upper longitudinal region, the lower longitudinal region is longitudinally smooth.

Fig. 2 shows a fragmentary portion of the transporter belt and filter cloth. The filter cloth is shown cut away to reveal the surface of the belt. The belt is shown in the nearest region X as passing over the drive roller so that it is curved in the longitudinal profile. Fig. 2 shows the effect that this has on the kerbs 38, in that the sinusoidal upper longitudinal portions, which occupy much the greater part of the height of the kerbs, can expand in bellows fashion to accommodate this curvature.

As can also be seen from Figs. 2 and 3, the filter cloth 26 is laid on the transporter belt so that it completely covers the grooved top surface of the belt, extends around and in contact with the smooth curved surface 43 of the lower longitudinal region 42, and some distance or all the way up the upper longitudinal region 40. As can be seen from Fig. 3, this provides a good overlap of the filter cloth with the kerbs, and the shape of the inside surfaces of the kerbs, in particular the curved surface 43 and the incline of the upper longitudinal portion 40, helps to keep the filter cloth in good contact with the surface of the belt and the kerbs, so that filtering is efficiently carried out through the filter cloth and into the grooves 34. By enabling this substantial overlap at the edges of the filter cloth a substantially wider than normal filter cloth can be used. For example, if vertical kerbs were employed with a sharp corner between the kerb and the top surface of the belt, the filter cloth would have to fit exactly between the kerbs, and if the grooves extended up to the kerbs there would be no overlap of the edges of the filter cloth and the risk of leakage would be great. Even if the bottom edges of the vertical kerbs were curved, the overlap of the filter cloth would be limited to that curved corner. The curve and the outward slope, by allowing the wider filter cloth to be used, requires less accurate tracking machinery for the cloth. The sinusoidal configuration of the greater part of the kerbs not only reduces the risk of fracture of the kerbs, but enables higher kerbs to be used; for example up to 300 mm rather than 125 mm high. The invention is also of value for the kerbs of heights less than 125 mm high as it allows small diameter head and tail pulleys to be used for the transporter belt. This means that the equipment requires less skill to operate without spillage, and enables very high liquid rates to be used. The sloping base surface 46 of each recess 44 of the kerb ensures that filtrate is not retained in the recess and thereby lost. Since the filtcate is normally the more valuable component in this type of filtering, this represents an important saving. The angle at which the kerbs are outwardly sloped can be quite important. If they are too upright then the filter cloth cannot be overlapped up the sides of the kerbs to any substantial extent. If they are at too great an angle to the vertical, however, wave formation can occur in the slurry, which results in slopping and therefore waste. During the last washing section of the filtrate a water spray can be applied to the inside surfaces of the upper longitudinal portions 40 of the kerbs, as indicated by the arrow Y, to wash the recesses 44 so that any filtrate therein is returned to the slurry for filtration.

Referring now to Fig. 4, this embodiment is generally similar to that of Fig. 3, and like parts are given the same reference numerals. In this embodiment, however, the base of each recess 44 does not have a clearly identifiable lower end surface 46 which has a different slope from that of the upper part of the recess. Instead the base, and hence the sloping surface 46, extends with uniform slope for the entire height of the recess. The recesses 44 are more zig-zag or V-shaped in plan view so that the inside surface of the upper longitudinal region 40 of the kerb has flat triangular surfaces 41 which merge with the smoothly curved lower longitudinal region 42. The angle α is 27 1/2° from the vertical in this embodiment. However, the inclination from the vertical of the outside of the kerb is 37°. Thus the kerb has a minimum overall thickness in the top part of the lower longitudinal region 42, especially where it meets the upper longitudinal region 40. However, as can be seen from Fig. 4, the thickness of the rubber itself reduces somewhat from the bottom to the top of the upper longitudinal region 40.

## Claims

1. A transporter belt (20) for a horizontal belt vacuum filter, having on its top surface transverse grooves (34) leading to vacuum applying and liquid extraction apertures (36) in the belt and bounded by upstanding kerbs (38) along the opposite longitudinal margins of the belt, characterised in that the kerbs each comprise a lower longitudinal region (42) adjacent to the belt and an upper longitudinal region (40) extending downwardly from the top edge of the kerb, the lower longitudinal region (42) being longitudinally smooth and in transverse section providing a smooth curve from the top surface of the belt to the upper longitudinal portion (40), the upper longitudinal portion (40) being longitudinally sinusoidal, the base (46) of each recess (44) on the inside surface of the kerb provided by the sinusoidal configuration sloping downwardly towards the centre of the belt so that liquid accumulating in the recess flows therefrom onto the belt.

2. A transporter belt according to claim 1, wherein the kerbs (38) are vertical or mutually outwardly inclined (α) in the range 0° to 35° from the vertical.

3. A transporter belt according to claim 2, wherein said inclination (α) is in the range 20° to 30° from the vertical.

4. A transporter belt according to any one of claims 1, 2 and 3, wherein (Fig. 4) the base (46) of each recess (44) extends with substantially uniform slope for the entire height of the recess.

5. A transporter belt according to any one of the preceding claims wherein the outside of each kerb (38) has a greater inclination from the vertical than has the inside of the kerb, so that the kerb has a minimum overall thickness in the top part of the lower longitudinal region (42).

6. A transporter belt according to claim 5 wherein the thickness of the material of the kerb reduces from the bottom to the top of the upper longitudinal region (42).

7. A method of filtering suspensed solids from a liquid using a horizontal belt vacuum filter in which a filter cloth (26) is continuously laid on a moving support and transporter belt (20), a slurry to be filtered is delivered onto the moving filter cloth and the belt is passed over a suction box so that liquid from the slurry is extracted through apertures (36) in the belt; characterised by the use of a transporter belt as defined in any one of the preceding claims, whereby the filter cloth covers over the top surface of the belt and at least the lower longitudinal regions (42) of the kerbs.

8. A method according to claim 7 wherein the filter cloth extends at least partway up the sinusoidal upper longitudinal region (40) of the kerbs.

9. A method according to claim 7 or claim 8 wherein before the belt leaves the suction box a washing liquid is directed into the recesses (44) in the inside surfaces of the kerbs (38).

## Revendications

1. Bande transporteuse (20) pour un filtre à bande horizontale travaillant sous vide, ayant à sa surface supérieure des gorges transversales (34) conduisant à des ouvertures d'application du vide et d'extraction du liquide (36) dans la bande et délimitée par des bordures dressées (38) le long des lisières longitudinales opposées de la bande, caractérisée en ce que chaque bordure comprend une région longitudinale inférieure (42) adjacente à la bande et une région longitudinale supérieure (40) s'étendant vers le bas à partir du bord supérieur de la bordure, la région longitudinale inférieure (42) étant longitudinalement lisse et formant, en section transversale, une courbe régulière de la surface supérieure de la bande jusqu'à la partie longitudinale supérieure (40), la partie longitudinale supérieure (40) étant longitudinalement sinusoïdale, la base (46) de chaque évidement (44) sur la surface interne de la bordure formée par la configuration sinusoïdale étant en pente vers le bas, vers le centre de la bande de façon que le liquide s'accumulant dans l'évidement s'en écoule sur la bande.

2. Bande transporteuse selon la revendication 1 où les bordures (38) sont verticales ou mutuellement inclinées vers l'extérieure (α) dans la gamme de 0° à 35° par rapport à la verticale.

3. Bande transporteuse selon la revendication 2 où ladite inclinaison (α) est dans la gamme de 20° à 30° par rapport à la verticale.

4. Bande transporteuse selon l'une quelconque des revendications 1, 2 et 3 où (figure 4) la base (46) de chaque évidement (44) s'étend avec une pente sensiblement uniforme sur toute la hauteur de l'évidement.

5. Bande transporteuse selon l'une quelconque des revendications précédentes où l'extérieur de chaque bordure (38) a une plus forte inclinaison par rapport à la verticale que ne l'a l'intérieur de la bordure, donc la bordure a une épaisseur minimum totale à la partie supérieure de la région longitudinale inférieure (42).

6. Bande transporteuse selon la revendication 5 où l'épaisseur du matériau de la bordure se réduit du bas jusqu'au haut de la région longitudunale supérieure (42).

7. Méthode de filtration de solides en suspension d'un liquide en utilisant un filtre à bande horizontale travaillant sous vide où un tissu de filtre (26) est continuellement disposé sur un support mobile et une bande transporteuse (20), une bouillie à filtrer est délivrée au tissu mobile de filtre et la bande passe sur un caisson d'aspiration de façon que le liquide de la bouillie soit extrait à travers les ouvertures (36) dans la bande; caractérisée par l'utilisation d'une bande transporteuse telle que définie selon l'une quelconque des revendications précédentes, et ainsi le tissu du filtre couvre la surface supérieure de la bande et au moins les régions longitudinales inférieures (42) des bordures.

8. Méthode selon la revendication 7 où le tissu du filtre s'étend au moins partiellement sur la région longitudinale sinusoîdale supérieure (40) des bordures.

9. Méthode selon la revendication 7 ou la revendication 8 où avant que la bande ne quitte le caisson d'aspiration, un liquide de lavage est dirigé dans les évidements (44) dans les surfaces internes des bordures (38).

## Patentansprüche

1. Ein Förderband (20) für einen horizontalen Vakuumbandfilter, mit in Querrichtung verlaufenden Nuten (34) in seiner oberen Fläche, die zu Vakuumanlege- und Flüssigkeitsextraktionsöffnungen (36) im Band führen und das von nach oben abstehenden Bordkanten (38) entlang den gegenüberliegenden Längsrändern des Bandes begrenzt ist, dadurch gekennzeichnet, daß jede der Bordkanten einen an das Band angrenzenden unteren Längsbereich (42) und einen oberen Längsbereich (40) aufweist, der sich vom oberen Rand der Bordkante aus nach unten erstreckt, daß der untere Längsbereich (42) in Längsrichtung glatt ist und im Querschnitt eine glatte Krümmung von der oberen Fläche des Bandes zum oberen Längsabschnitt (40) hin aufweist, daß der obere Längsabschnitt (40) in Längsrichtung sinusförmig (sinusoidal) ausgebildet ist und daß die Basis (46) jeder Ausnehmung (44) an der Innernfläche der Bordkante, die von der sinusförmigen (sinusoidal) Konfiguration gebildet wird, nach unten zur Mitte des Bandes hin geneigt ist, so daß sich in der Ausnehmung sammelnde Flüssigkeit daraus auf das Band fließt.

2. Ein Förderband nach Anspruch 1, worin die Bordkanten vertikal angeordnet oder gegenseitig nach außen in einem Winkel (α) in einem Bereich von 0° bis 35° in bezug auf die Vertikale geneigt sind.

3. Ein Förderband nach Anspruch 2, worin die genannte Neigung (α) innerhalb eines Bereiches von 20° bis 30° in bezug auf die Vertikale liegt.

4. Ein Förderband nach einem der Ansprüche 1, 2 und 3, worin (Fig. 4) die Basis (46) jeder Ausnehmung (44) sich mit im wesentlichen einheitlicher Neigung mit der gesamten Höhe der Ausnehmung erstreckt.

5. Ein Förderband nach einem der vorhergehenden Ansprüche, worin die Außenseite jeder Bordkante (38) eine stärkere Neigung in bezug auf die Vertikale aufweist als die Innenseite der Bordkante, do daß die Bordkante im oberen Abschnitt des unteren Längsbereiches (42) eine Mindestgesamtdicke aufweist.

6. Ein Förderband nach Anspruch 5, worin die Dicke des Materials der Bordkante von unten nach oben im oberen Längsbereich (40) abnimmt.

7. Ein Verfahren zum Filtern von suspendierten Feststoffen aus einer Flüssigkeit unter Verwendung eines horizontalen Vakuumfilterbandes, in dem ein Filtertuch (26) kontinuierlich auf ein sich bewegendes Stütz- und Förderband (20) aufgelegt wird, ein zu filternder Brei auf das sich bewegende Filtertuch aufgebracht wird und das Band über einen Saugkasten geführt wird, so daß Flüssigkeit aus dem Brei durch Öffnungen (36) im Band extrahiert wird; gekennzeichnet durch die Verwendung eines Förderbandes wie in einem der vorhergehenden Ansprüche definiert, wodurch das Filtertuch die obere Fläche des Bandes und wenigstens die unteren Längsbereich (42) der Bordkanten überdeckt.

8. Ein Verfahren nach Anspruch 7, worin sich das Filtertuch wenigstens teilweise auf den sinusförmigen (sinusoidal) oberen Längsbereich (40) der Bordkanten hinauf erstreckt.

9. Ein Verfahren nach Anspruch 7 oder 8, worin, bevor das Band den Saugkasten verläßt, eine Waschflüssigkeit in die Ausnehmungen (44) in den inneren Flächen der Bordkanten (38) gerichtet wird.

0 071 480

FIG.1

FIG.2

1

FIG.4

FIG.3